# EUROPÄISCHE PATENTSCHRIFT

(11) **EP 2 008 002 B1**
(45) Veröffentlichungstag und Bekanntmachung des Hinweises auf die Patenterteilung: **16.01.2013**
(21) Anmeldenummer: 07727611.1
(22) Anmeldetag: 02.04.2007
(51) Int. Cl.: F16H 61/02

(54) **VERFAHREN ZUR SCHALTSTEUERUNG EINES AUTOMATISIERTEN STUFENSCHALTGETRIEBES**
METHOD FOR CONTROLLING SHIFTING OF A STEPPED AUTOMATIC TRANSMISSION
PROCEDE DE COMMANDE DE CHANGEMENT DE VITESSE D'UNE BOITE DE VITESSES A ETAGES AUTOMATISEE

(30) Priorität: 15.04.2006 DE 102006017712
(43) Veröffentlichungstag der Anmeldung: 31.12.2008
(73) Patentinhaber: ZF Friedrichshafen AG, 88038 Friedrichshafen (DE)
(72) Erfinder: WOLFGANG, Werner, 88213 Ravensburg (DE); WÜRTHNER, Maik, 88048 Friedrichshafen (DE); SAUTER, Ingo, Aberdeen, NC 28315 (US)
(86) Internationale Anmeldenummer: PCT/EP2007/053139
(87) Internationale Veröffentlichungsnummer: WO 2007/118783

(56) Entgegenhaltungen:
- DE-A1- 19 638 064
- DE-A1- 19 703 863
- DE-A1-102004 002 813

## Beschreibung

Die Erfindung betrifft ein Verfahren zur Schaltsteuerung eines automatisierten Stufenschaltgetriebes eines Kraftfahrzeugs, bei dem permanent Betriebsparameter des Kraftfahrzeugs erfasst und jeweils.zur Auslösung und Durchführung einer Schaltung von einem Istgang in einen Zielgang ausgewertet werden, wobei vor einer Schaltung jeweils die Schaltdrehzahl zur Auslösung der Schaltung und der Zielgang bestimmt werden.

Zur Auslösung und Durchführung einer Getriebeschaltung müssen zuvor die als Schaltdrehzahl bezeichnete Drehzahl des Antriebsmotors, bei der die Schaltung beginnen soll, und der Zielgang, in den durch die Schaltung von dem eingelegten Istgang aus geschaltet werden soll, bestimmt werden. Hierzu werden üblicherweise Betriebsparameter des Kraftfahrzeugs, wie die aktuelle Fahrgeschwindigkeit, die aktuelle Beschleunigung bzw. Verzögerung des Kraftfahrzeugs, die aktuelle Drehzahl des Antriebsmotors (Motordrehzahl), der Lastzustand bzw. das Drehmoment des Antriebsmotors, die Fahrpedalstellung, die Änderung bzw. die Änderungsgeschwindigkeit der Fahrpedalstellung, die Betätigung eines Kickdown-Schalters, gegebenenfalls auch die Betätigung einer Fahrzeugbremse, der aktuelle Fahrwiderstand, insbesondere bei Nutzfahrzeugen auch der Beladungszustand bzw. die Masse des Kraftfahrzeugs und die Fahrbahnneigung, entweder unmittelbar durch entsprechende Sensoren erfasst oder durch eine Auswertung von Steuergrößen, insbesondere des Antriebsmotors, und/oder von erfassten Messwerten anderer Betriebsparameter berechnet.

Bei der Bestimmung der Schaltdrehzahl und des Zielgangs wird allgemein zwischen einer "Schaltdrehzahl-orientierten Schaltung" und einer "Zieldrehzahl-orientierten Schaltung" unterschieden.

Bei einer "Schaltdrehzahl-orientierten Schaltung" wird in Abhängigkeit relevanter Betriebsparameter zunächst die Schaltdrehzahl, also diejenige Motordrehzahl, bei der die Schaltung erfolgen bzw. ausgelöst werden soll, bestimmt. Danach wird ein zur momentanen Fahrsituation, insbesondere zur momentanen Fahrzeugbeschleunigung, passender Gangsprung und damit, ausgehend von dem aktuell eingelegten Istgang, der Zielgang bestimmt, in den durch die Getriebeschaltung geschaltet werden soll.

Der Vorteil einer "Schaltdrehzahl-orientierten Schaltung" liegt in einer relativ spontanen Reaktion des automatisierten Stufenschaltgetriebes auf geänderte Betriebsbedingungen und auf Kommandoeingaben des Fahrers. So wird bei einer Einfahrt aus der Ebene in eine Steigung mit entsprechend ansteigendem Fahrwiderstand und gegebenenfalls einer Verzögerung des Kraftfahrzeugs relativ schnell eine Rückschaltung ausgelöst. Ebenso erfolgt bei einer Betätigung des Kickdown-Schalters über das Fahrpedal zur Auslösung der Kickdown-Funktion, wie von dem Fahrer erwartet, eine unmittelbare Rückschaltung, da in diesem Fall die aktuelle Motordrehzahl als Schaltdrehzahl angesehen wird. Bei Kraftfahrzeugen, für deren Stufenschaltgetriebe mehrere Schaltprogramme, wie z.B. ein Eco-Modus und ein Sport-Modus zur Verfügung stehen, werden die Schaltdrehzahl und der Zielgang auch von dem momentan aktiven Schaltprogramm beeinflusst. So liegt die Schaltdrehzahl bei aktiviertem Eco-Modus zur Erzielung eines niedrigen Kraftstoffverbrauchs generell niedriger als im Sport-Modus, bei dem die Erzielung einer hohen Fahrdynamik im Vordergrund steht.

Bei einer "Zieldrehzahl-orientierten Schaltung" wird dagegen zuerst die Zieldrehzahl, also diejenige Motordrehzahl bestimmt, die sich nach einer Schaltung einstellen soll. Davon ausgehend wird in Abhängigkeit von aktuellen Betriebsparametern, insbesondere der Fahrzeugbeschleunigung, ein geeigneter Gangsprung aus dem aktuell eingelegten Istgang und damit der Zielgang sowie die Schaltdrehzahl bestimmt. Der Vorteil einer "Zieldrehzahl-orientierten Schaltung" liegt in der Möglichkeit, den Antriebsmotor unter allen Betriebsbedingungen in einem optimalen, insbesondere einem verbrauchsgünstigen Drehzahlbereich betreiben zu können.

Ein Verfahren für eine "Zieldrehzahl-orientierte Schaltung" ist in der DE 196 38 064 C2 beschrieben. Dort ist für eine Hochschaltung in den nächsthöheren Gang vorgesehen, dass zum Erreichen derselben Zieldrehzahl eine Schaltung bei einer Fahrt mit geringer Beladung und hoher Beschleunigung bei einer niedrigeren Schaltdrehzahl und bei einer Fahrt mit großer Beladung und niedriger Beschleunigung bei einer höheren Schaltdrehzahl ausgelöst wird.

Bei beiden Schaltungsarten sind jeweils Drehzahlgrenzen einzuhalten; bei einer "Schaltdrehzahl-orientierten Schaltung" eine Zieldrehzahlgrenze und bei einer "Zieldrehzahl-orientierten Schaltung" eine Schaltdrehzahlgrenze, um die Motordrehzahl und damit das gewünschte Betriebsverhalten des Antriebsmotors in einem gewünschten Bereich, z.B. mit niedrigem Kraftstoffverbrauch und/oder mit hoher Durchzugskraft des Antriebsmotors, zu halten. Diese Drehzahlgrenzen können im Extremfall identisch mit den Motordrehzahlgrenzen, also der zulässigen Mindestdrehzahl bzw. der zulässigen Maximaldrehzahl des Antriebsmotors, sein; sie liegen aber zumeist innerhalb dieser Motordrehzahlgrenzen.

Da bei den bekannten Verfahren zur Schaltsteuerung von automatisierten Stufenschaltgetrieben jeweils nur eine Schaltungsart vorgesehen ist, werden die Möglichkeiten zur Anpassung an die jeweils vorliegende Fahr- bzw. Betriebssituation nur unzureichend ausgenutzt. Der vorliegenden Erfindung liegt daher die Aufgabe zugrunde, ein Verfahren der eingangs genannten Art anzugeben, mit dem die Schaltungen, insbesondere die Bestimmung der Schaltdrehzahl und des Zielgangs, besser an die jeweilige Fahr- und Betriebssituation angepasst werden können.

Die Erfindung betrifft gemäß den Merkmalen des Hauptanspruchs daher ein Verfahren zur Schaltsteuerung eines automatisierten Stufenschaltgetriebes eines Kraftfahrzeugs, bei dem permanent Betriebsparameter des Kraftfahrzeugs erfasst und jeweils zur Auslösung sowie Durchführung einer Schaltung von einem Istgang in einen Zielgang ausgewertet werden, wobei vor einer Schaltung jeweils die Schaltdrehzahl zur Auslösung der Schaltung und der Zielgang bestimmt werden.

Außerdem ist bei diesem Verfahren vorgesehen, dass die Schaltungsarten "Schaltdrehzahl-orientierte Schaltung" und "Zieldrehzahl-orientierte Schaltung" vorgesehen sind, und dass unmittelbar vor einer Schaltung in Abhängigkeit von zumindest einem der Betriebsparameter entschieden wird, in welcher der beiden Schaltungsarten die Schaltung durchgeführt wird.

Durch die Verfügbarkeit beider Schaltungsarten kann die jeweilige Schaltung besser an die vorliegenden Betriebsbedingungen, insbesondere an den aktuellen Fahrwiderstand, an den aktuellen Lastzustand des Antriebsmotors und an die aktuelle Leistungsanforderung des Fahrers angepasst werden. Abhängig von der Fahrsituation und der Leistungsanforderung des Fahrers kann somit beispielsweise eine optimale Fahrdynamik oder ein geringer Kraftstoffverbrauch des Kraftfahrzeugs erzielt werden.

Vorteilhafte Ausgestaltungen und Weiterbildungen des erfindungsgemäßen Verfahrens sind in den Ansprüchen 2 bis 13 angegeben.

Zur Erfassung der aktuellen Fahrsituation und einer optimalen Anpassung der Schaltungen ist zweckmäßig vorgesehen, dass während einer Fahrt permanent der Fahrwiderstand des Kraftfahrzeugs ermittelt wird, und dass eine Schaltung bei Vorliegen eines niedrigen Fahrwiderstands als "Zieldrehzahl-orientierte Schaltung" und bei Vorliegen eines hohen Fahrwiderstands als "Schaltdrehzahl-orientierte Schaltung" durchgeführt wird. Damit wird dem Umstand Rechnung getragen, dass bei Vorliegen eines hohen Fahrwiderstands die Fahrdynamik, also eine schnelle Reaktion auf geänderte Betriebsbedingungen, im Fordergrund steht, welches durch "Schaltdrehzahl-orientierte Schaltungen" erfüllt wird. So wird in diesem Fall z.B. bei einer Fahrt aus der Ebene in eine Steigungsstrecke eine schnelle Reaktion auf den ansteigenden Fahrwiderstand in Form einer Schaltdrehzahl-orientierten Rückschaltung durchgeführt und damit eine unerwünschte Verzögerung des Kraftfahrzeugs vermieden.

Im Gegensatz dazu steht bei Vorliegen eines niedrigen Fahrwiderstands genügend Spielraum zur Verfolgung einer übergeordneten Fahrstrategie zur Verfügung, welches am besten durch "Zieldrehzahl-orientierte Schaltungen" erreichbar ist. Durch eine entsprechende Steuerung der Schaltungen kann z.B. der Antriebsmotor weitgehend in einem Drehzahlbereich mit niedrigem spezifischem Kraftstoffverbrauch gehalten und somit ein besonders ökonomischer Betrieb des Kraftfahrzeugs erreicht werden.

Da der Fahrwiderstand eines Kraftfahrzeugs, insbesondere eines Nutzfahrzeugs, maßgeblich von der Fahrbahnneigung in Fahrtrichtung und von dem Beladungszustand bzw. der Fahrzeugmasse beeinflusst wird, ist zweckmäßig vorgesehen, dass während einer Fahrt permanent die Fahrbahnneigung ermittelt wird, und dass eine Schaltung bei einer Fahrt in der Ebene oder auf einer Gefällstrecke als "Zieldrehzahl-orientierte Schaltung" und bei einer Fahrt auf einer Steigungsstrecke als "Schaltdrehzahl-orientierte Schaltung" durchgeführt wird.

Zudem ist es vorteilhaft, wenn während einer Fahrt permanent der Beladungszustand bzw. die Fahrzeugmasse des Kraftfahrzeugs ermittelt wird, und eine Schaltung bei Vorliegen einer geringen Beladung bzw. einer kleinen Fahrzeugmasse als "Zieldrehzahl-orientierte Schaltung" erfolgt, während eine Schaltung bei Vorliegen einer starken Beladung bzw. einer großen Fahrzeugmasse als "Schaltdrehzahl-orientierte Schaltung" durchgeführt wird.

Ebenso beeinflusst der aktuelle Lastzustand des Antriebsmotors die Fahrdynamik und den Kraftstoffverbrauch des Kraftfahrzeugs. Demzufolge ist zweckmäßig auch vorgesehen, dass während einer Fahrt permanent der Lastzustand des Antriebsmotors ermittelt wird, und dass eine Schaltung bei einem aktuellen Teillastbetrieb des Antriebsmotors als "Zieldrehzahl-orientierte Schaltung" und bei einem aktuellen Volllastbetrieb des Antriebsmotors als "Schaltdrehzahl-orientierte Schaltung" durchgeführt wird.

Schließlich wird der verfügbare Spielraum der Getriebesteuerung auch von der jeweiligen Leistungsanforderung des Fahrers beeinflusst. Es ist daher vorteilhaft vorgesehen, dass während einer Fahrt auch permanent die Leistungsanforderung des Fahrers ermittelt wird, und dass eine Schaltung bei Vorliegen einer geringen Leistungsanforderung des Fahrers als "Zieidrehzahlorientierte Schaltung" und bei Vorliegen einer hohen Leistungsanforderung des Fahrers als "Schaltdrehzahl-orientierte Schaltung" durchgeführt wird. Hierbei kann insbesondere vorgesehen sein, dass eine durch die Betätigung des Kickdown-Schalters ausgelöste Rückschaltung als "Schaltdrehzahl-orientierte Schaltung" durchgeführt wird, damit diese Rückschaltung, wie von dem Fahrer erwartet, spontan erfolgt.

Vorteilhaft sind bei mindestens einer der beiden Schaltungsarten, vorzugsweise bei beiden Schaltungsarten, der Schaltmodus "Einhalten einer Gangsprungvorgabe" und der Schaltmodus "Ausschöpfen des verfügbaren Drehzahlbereichs" vorgesehen, wobei unmittelbar vor einer Schaltung in Abhängigkeit von zumindest einem der Betriebsparameter entschieden wird, in welchem Schaltmodus die Schaltung durchgeführt wird.

Dabei bedeutet der Schaltmodus "Einhalten einer Gangsprungvorgabe", dass eine für eine bestimmte Fahrsituation vorgegebene Gangsprungvorgabe möglichst eingehalten wird. Zum Beispiel kann für ein Nutzfahrzeug, das mit einem Stufenschaltgetriebe mit enger Gangabstufung ausgerüstet ist, für eine Fahrt in der Ebene mit geringer Beladung die Gangsprungvorgabe G3 - G6 - G8 - G11 - G12 mit dem dritten Gang G3, dem sechsten Gang G6 usw. vorgegeben sein, da die darunter liegenden Gänge G1 und G2 nur zum Anfahren und die dazwischen liegenden Gänge G4, G5, G7, G9, G10 nur bei einer Fahrt in Steigungs- und Gefällstrecken oder bei einer Fahrt mit hoher Beladung benötigt werden.

Dabei wird zweckmäßig vor einer Durchführung der Schaltung im Schaltmodus "Einhalten einer Gangsprungvorgabe" geprüft, ob die zugeordnete Drehzahlgrenze, also bei einer "Schaltdrehzahl-orientierten Schaltung" die Zieldrehzahlgrenze und bei einer "Zieldrehzahl-orientierten Schaltung" die Schaltdrehzahlgrenze, überschritten wird. Bei einer Überschreitung der Drehzahlgrenze wird der vorgesehene Gangsprung dann stufenweise so lange reduziert, bis die betreffende Drehzahlgrenze eingehalten wird. Aufgrund der Gangsprungvorgabe kann der Gangsprung der Schaltung auch kleiner als der durch die Drehzahlgrenze begrenzte größtmögliche Gangsprung sein.

Im Schaltmodus "Ausschöpfen des verfügbaren Drehzahlbereichs" wird die jeweilige Schaltung dagegen immer mit dem durch die Drehzahlgrenze begrenzten größtmöglichen Gangsprung durchgeführt.

Die Bestimmung des Schaltmodus erfolgt unabhängig von der Schaltungsart bevorzugt in Abhängigkeit von dem Lastzustand und der Mötordrehzahl des Antriebsmotors. Hierzu ist zweckmäßig vorgesehen, dass während einer Fahrt permanent der Lastzustand und die Motordrehzahl des Antriebsmotors ermittelt werden, und dass eine Schaltung bei Vorliegen von Volllastbetrieb des Antriebsmotors und einer niedrigen Motordrehzahl oder bei Vorliegen einer hohen Motordrehzahl des Antriebsmotors im Schaltmodus "Ausschöpfen des verfügbaren Drehzahlbereichs" durchgeführt wird, und dass eine Schaltung bei Vorliegen einer mittleren Motordrehzahl im Schaltmodus "Einhalten der Gangsprungvorgabe" erfolgt.

Hierdurch wird sichergestellt, dass ungünstige Betriebszustände des Antriebsmotors, wie das Vorliegen von Volllast bei extrem niedriger Motordrehzahl oder das Vorliegen einer extrem hohen Motordrehzahl, mit größtmöglichem Drehzahlabstand durch den jeweils größtmöglichen Gangsprung verlassen werden. Andererseits wird dadurch auch erreicht, dass bei Vorliegen einer mittleren Motordrehzahl eine durch die Gangsprungvorgabe implizit vorgegebene Fahrstrategie, die z.B. auf einen geringen Kraftstoffverbrauch abzielen kann, eingehalten wird.

Bei einfachen automatisierten Schaltgetrieben ist eine Schaltung zwangsläufig mit einer Zugkraftunterbrechung verbunden, während der am abtriebsseitigen Antriebsstrang eine Drehzahländerung eintritt, die bei positivem, also das Kraftfahrzeug abbremsendem Fahrwiderstand negativ ist, und bei negativem, d.h. das Kraftfahrzeug antreibendem Fahrwiderstand positiv ist. In abgeschwächter Form tritt eine derartige schaltungsbedingte Drehzahländerung auch bei automatisierten Lastschaltgetrieben, wie Doppelkupplungsgetrieben und Planetengetriebeautomaten, auf, da bei diesen Stufenschaltgetrieben aufgrund von getriebeinternen Verspannungen und Reibungsverlusten während einer Schaltung in der Regel ein Einbruch des ausgangsseitigen Drehmoments zu verzeichnen ist.

Zur Berücksichtigung dieses Effektes ist bei der Ermittlung des Zielgangs und der Schaltdrehzahl zweckmäßig vorgesehen, dass vor einer Schaltung der während der Schaltung wirksame Fahrwiderstand ermittelt und die daraus resultierende abtriebsseitige Drehzahländerung berechnet wird, und dass mit dieser Drehzahländerung bei einer "Schaltdrehzahl-orientierten Schaltung" die Zieldrehzahl und bei einer "Zieldrehzahl-orientierten Schaltung" die Schaltdrehzahl korrigiert wird.

Demzufolge wird bei einer "Schaltdrehzahl-orientierten Schaltung" die Zieldrehzahl bei hohem Fahrwiderstand, wie z.B. bei einer Fahrt auf einer Steigungsstrecke, abgesenkt und bei niedrigem Fahrwiderstand, wie beispielsweise bei einer Fahrt auf einer Gefällstrecke, angehoben.

Im Gegensatz dazu wird bei einer "Zieldrehzahl-orientierten Schaltung" entsprechend die Schaltdrehzahl bei hohem Fahrwiderstand angehoben und bei niedrigem Fahrwiderstand abgesenkt.

Wird dabei die relevante Drehzahlgrenze, bei einer "Schaltdrehzahl-orientierten Schaltung" die Zieldrehzahlgrenze bzw. bei einer "Zieldrehzahl-orientierten Schaltung" die Schaltdrehzahlgrenze, überschritten, so muss der vorgesehene Gangsprung um mindestens eine Gangstufe reduziert werden, also bei einer Hochschaltung in einen niedrigeren Gang und bei einer Rückschaltung in einen höheren Gang geschaltet werden.

Zur Verdeutlichung der Erfindung ist der Beschreibung eine Zeichnung beigefügt.
In diesen zeigt:
- Fig. 1: Eine Übersicht zur Darstellung der Freiheitsgrade des erfindungsgemäßen Verfahrens,
- Fig. 2: ein Drehzahldiagramm zur Veranschaulichung schaltungsrelevanter Drehzahlen am Beispiel einer Rückschaltung,
- Fig. 3: ein Drehzahldiagramm zur Darstellung von zwei Schaltungsarten am Beispiel einer Hochschaltung und
- Fig. 4: ein Drehzahldiagramm zur Veranschaulichung von zwei Schaltungsarten am Beispiel einer Rückschaltung.

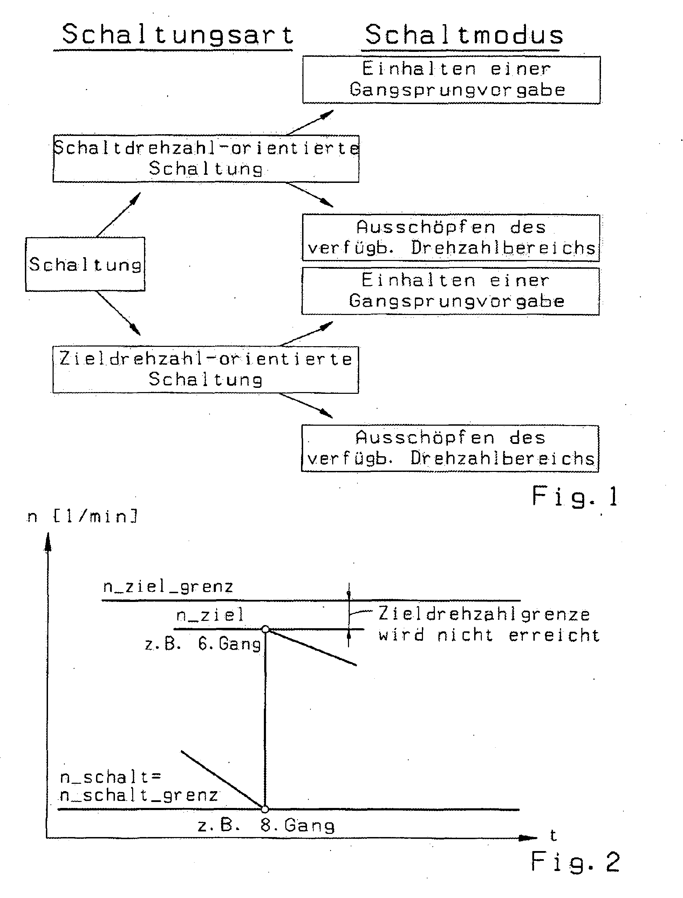

Wie Fig. 1 entnehmbar ist, stehen bei dem erfindungsgemäßen Verfahren zwei Schaltungsarten und jeweils zwei Schaltmodi zur Verfügung, wodurch eine Schaltung durch eine entsprechende Bestimmung der Schaltdrehzahl, also der Motordrehzahl, bei der die Schaltung ausgelöst wird, des Zielgangs, in den durch die Schaltung geschaltet wird, und der Zieldrehzahl, also der Motordrehzahl, die am Ende der Schaltung erreicht wird, besser als bei bisherigen Schaltsteuerungsverfahren an die aktuellen Fahr- und Betriebsbedingungen angepasst werden kann.

Bei einer "Schaltdrehzahl-orientierten Schaltung" wird zunächst die Schaltdrehzahl n_schalt bestimmt. Ausgehend von der Schaltdrehzahl n_schalt wird dann der Gangsprung und damit der Zielgang und die Zieldrehzahl n_ziel ermittelt. Dabei müssen die Schaltdrehzahl n_schalt und die Zieldrehzahl n_ziel innerhalb eines Drehzahlbereiches liegen, der durch eine Schaltdrehzahlgrenze n_schalt_grenz und eine Zieldrehzahlgrenze n_ziel_grenz begrenzt ist. Dieser Drehzahlbereich wird durch das Steuerungsprogramm des Stufenschaltgetriebes als zulässiger Betriebsbereich des Antriebsmotors vorgegeben. Es kann sich dabei im Extremfall um den Drehzahlbereich zwischen der zulässigen Minimaldrehzahl und der zulässigen Maximaldrehzahl des Antriebsmotors handeln. Zumeist ist dieser Drehzahlbereich aber enger gefasst und kann z.B. dem Drehzahlbereich mit geringem spezifischem Kraftstoffverbrauch des Antriebsmotors oder dem Drehzahlbereich mit hohem Drehmoment des Antriebsmotors entsprechen.

Bei einer "Schaltdrehzahl-orientierten Schaltung" ist die Schaltdrehzahl n_schalt zumeist identisch mit der Schaltdrehzahlgrenze n_schalt_grenz, kann aber auch davon abweichen. Aufgrund der diskreten Übersetzungssprünge zwischen den Gängen wird mit dem ermittelten Zielgang die Zieldrehzahlgrenze n_ziel_grenz in der Regel nicht erreicht, sondern die Zieldrehzahl n_ziel liegt zumeist bei einer Hochschaltung oberhalb und bei Rückschaltung unterhalb der Zieldrehzahlgrenze n_ziel_grenz.

In Fig. 2 ist eine "Schaltdrehzahl-orientierte Schaltung" am Beispiel einer Rückschaltung veranschaulicht. Darin ist der Verlauf der Motordrehzahl n über der Zeit t für eine Rückschaltung von dem achten Gang G8 in den sechsten Gang G6 dargestellt. Die Schaltung wird mit Erreichen der Schaltdrehzahl n_schalt ausgelöst, wobei die Schaltdrehzahl n_schalt der für diese eine Schaltung oder für mehrere ähnliche Schaltungen gültigen Schaltdrehzahlgrenze n_schalt_grenz entsprechen kann. Aufgrund des diskreten Übersetzungssprungs zwischen G8 und G6 wird die Zieldrehzahlgrenze n_ziel_grenz nicht erreicht, sondern die sich im sechsten Gang G6 einsteflende Zieidrehzahl n_ziel liegt unterhalb der Zieldrehzahlgrenze n_ziel_grenz.

Bei einer "Zieldrehzahl-orientierten Schaltung" wird dagegen zuerst die Zieldrehzahl n_ziel bestimmt und ausgehend davon entsprechend der Gangsprung und damit der Zielgang und die Schaltdrehzahl n_schalt ermittelt, wobei ebenfalls die jeweilige Schaltdrehzahlgrenze n_schalt_grenz und die Zieldrehzahlgrenze n_ziel_grenz eingehalten werden müssen, also nicht überschritten werden dürfen.

Bei einer "Zieldrehzahl-orientierten Schaltung" ist die Zieldrehzahl n_ziel zumeist identisch mit der Zieldrehzahlgrenze n_ziel_grenz; sie kann aber auch davon abweichen. Aufgrund der Gangabstufung wird die Zieldrehzahl n_ziel mit dem ermittelten Zielgang ausgehend von der Schaltdrehzahlgrenze n_schalt_grenz in der Regel nicht erreicht, sondern die Schaltdrehzahl n_schalt muss in Richtung auf die Zieldrehzahlgrenze n_ziel_grenz verändert werden, um die Zieldrehzahl n_ziel am Ende der Schaltung zu erreichen.

Bei beiden Schaltungsarten stehen zusätzlich jeweils die Schaltmodi "Einhalten einer Gangsprungvorgabe" und "Ausschöpfen des verfügbaren Drehzahlbereichs" zur Verfügung (siehe auch Fig. 1). Im Schaltmodus "Einhalten einer Gangsprungvorgabe" wird eine für eine bestimmte Fahrsituation festgelegte Gangsprungvorgabe eingehalten, sofern die jeweilige Drehzahlgrenze, also bei einer "Schaltdrehzahl-orientierten Schaltung" die Zieldrehzahlgrenze n_ziel_grenz und bei einer "Zieldrehzahl-orientierten Schaltung" die Schaltdrehzahlgrenze n_schalt_grenz, eingehalten wird. Bei einer Überschreitung der betreffenden Drehzahlgrenze wird der vorgesehene Gangsprung dann stufenweise so lange reduziert, bis die Drehzahlgrenze eingehalten wird. Im Schaltmodus "Ausschöpfen des verfügbaren Drehzahlbereichs" wird die jeweilige Schaltung dagegen mit dem durch die Drehzahlgrenze definierten größtmöglichen Gangsprung durchgeführt.

Da die Auswahl sowohl der Schaltungsart als auch des Schaltmodus vor der Durchführung einer Schaltung in Abhängigkeit von aktuellen Betriebsparametern erfolgt, ist die Schaltung optimal an die aktuelle Fahrsituation angepasst.

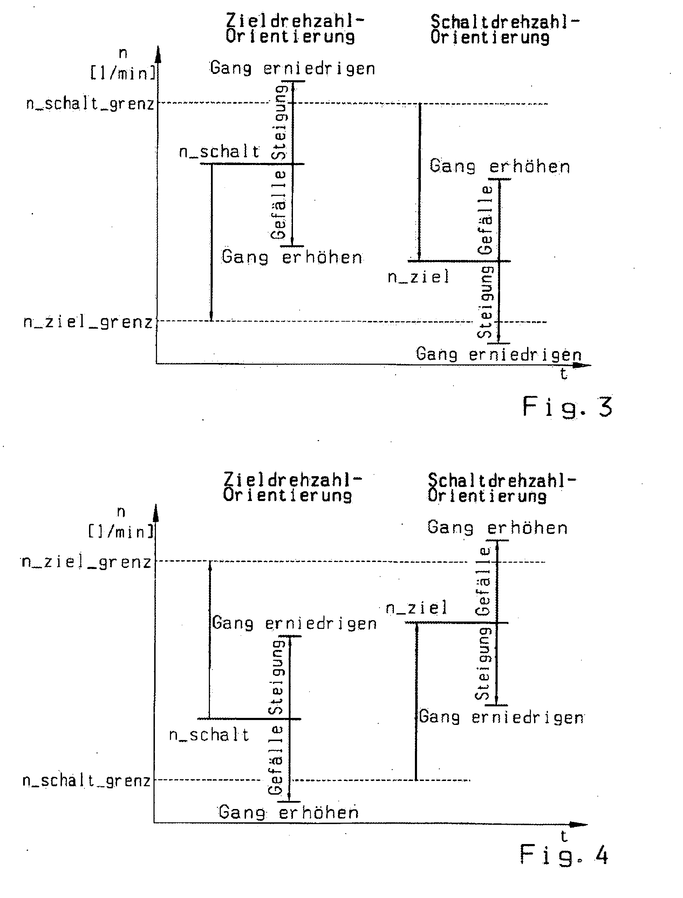

Dies ist beispielhaft, den Einfluss der Fahrbahnneigung betreffend, in Fig. 3 für eine Hochschaltung und in Fig. 4 für eine Rückschaltung, jeweils für eine "Zieldrehzahl-orientierte Schaltung" und für eine "Schaltdrehzahl-orientierte Schaltung", veranschaulicht.

In der Zieldrehzahl-orientierten Hochschaltung nach Fig. 3 liegt die Schaltdrehzahl n_schalt aufgrund der verfügbaren diskreten Übersetzungssprünge unterhalb der Schaltdrehzahlgrenze n_schalt_grenz, um im Zielgang ohne einen Einfluss der Topographie die Zieldrehzahlgrenze n_ziel_grenz zu treffen. Da das Kraftfahrzeug in der zugkraftfreien Phase der Schaltung aber beim Befahren einer Steigung abgebremst und beim Befahren eines Gefälles beschleunigt wird, und eine entsprechende Drehzahländerung an der Ausgangswelle des Stufenschaltgetriebes zu verzeichnen ist, muss zum Ausgleich, also um die Zieldrehzahlgrenze n_ziel_grenz mit derselben Schaltung dennoch zu treffen, die Schaltdrehzahl n_schalt beim Befahren einer Steigung erhöht und beim Befahren eines Gefälles verringert werden. Im Extremfall kann hierzu beim Befahren einer Steigung eine vorhergehende Rückschaltung und beim Befahren eines Gefälles eine vorhergehende Hochschaltung erforderlich sein.

Der sinngemäß gleiche Zusammenhang ist in Fig. 4 für eine Zieldrehzahl-orientierte Rückschaltung dargestellt.

In der Schaltdrehzahl-orientierten Hochschaltung gemäß Fig. 3 liegt die Zieldrehzahl n_ziel aufgrund der verfügbaren diskreten Übersetzungssprünge oberhalb der Zieldrehzahlgrenze n_ziel_grenz, weshalb ohne einen Einfluss der Topographie der Fahrstrecke die Zieldrehzahlgrenze n_ziel_grenz nicht erreicht wird. Beim Befahren einer Steigung verringert sich die Zieldrehzahl n_ziel aufgrund der Verzögerung des Kraftfahrzeugs während der Schaltung. Beim Befahren eines Gefälles erhöht sich die Zieldrehzahl n_ziel aufgrund der Beschleunigung des Kraftfahrzeugs während der Schaltung. Hierbei kann beim Befahren einer starken Steigung zuvor eine Rückschaltung erforderlich sein, um im Zielgang eine Unterschreitung der Zieldrehzahlgrenze n_ziel_grenz zu vermeiden. Ebenso kann beim Befahren eines starken Gefälles zuvor eine Hochschaltung erforderlich sein, um eine zu hohe Drehzahl im Zielgang zu verhindern.

Der sinngemäß gleiche Zusammenhang ist in Fig. 4 für eine Schaltdrehzahl-orientierte Rückschaltung dargestellt.

### Bezugszeichen

- G1: erster Gang
- G2: zweiter Gang
- G3: dritter Gang
- G4: vierter Gang
- G5: fünfter Gang
- G6: sechster Gang
- G7: siebter Gang
- G8: achter Gang
- G9: neunter Gang
- G10: zehnter Gang
- G11: elfter Gang
- G12: zwölfter Gang
- n: Drehzahl, Motordrehzahl
- n_schalt: Schaltdrehzahl
- n_schalt_grenz: Schaltdrehzahlgrenze
- n_ziel: Zieldrehzahl
- n_ziel_grenz: Zieldrehzahlgrenze
- t: Zeit

## Patentansprüche

1. Verfahren zur Schaltsteuerung eines automatisierten Stufenschaltgetriebes eines Kraftfahrzeugs, bei dem permanent Betriebsparameter des Kraftfahrzeugs erfasst und jeweils zur Auslösung und Durchführung einer Schaltung von einem Istgang in einen Zielgang ausgewertet werden, wobei vor einer Schaltung jeweils die Schaltdrehzahl n_schalt zur Auslösung der Schaltung und der Zielgang bestimmt werden, **dadurch gekennzeichnet, dass** die Schaltungsarten "Schaltdrehzahl-orientierte Schaltung" und "Zieldrehzahl-orientierte Schaltung" vorgesehen sind, und dass unmittelbar vor einer Schaltung in Abhängigkeit von zumindest einem der Betriebsparameter entschieden wird, in welcher der beiden Schaltungsarten die Schaltung durchgeführt wird.

2. Verfahren nach Anspruch 1, **dadurch gekennzeichnet, dass** während einer Fahrt permanent der Fahrwiderstand des Kraftfahrzeugs ermittelt wird, und dass eine Schaltung bei Vorliegen eines niedrigen Fahrwiderstands als "Zieldrehzahl-orientierte Schaltung" und bei Vorliegen eines hohen Fahrwiderstands als "Schaltdrehzahl-orientierte Schaltung" durchgeführt wird.

3. Verfahren nach Anspruch 1 oder 2, **dadurch gekennzeichnet, dass** während einer Fahrt permanent die Fahrbahnneigung ermittelt wird, und dass eine Schaltung bei einer Fahrt in der Ebene oder auf einer Gefällstrecke als "Zieldrehzahl-orientierte Schaltung" und bei einer Fahrt auf einer Steigungsstrecke als "Schaltdrehzahl-orientierte Schaltung" durchgeführt wird.

4. Verfahren nach Anspruch 2 oder 3, **dadurch gekennzeichnet, dass** während einer Fahrt permanent der Beladungszustand bzw. die Fahrzeugmasse des Kraftfahrzeugs ermittelt wird, und dass eine Schaltung bei Vorliegen einer geringen Beladung bzw. einer kleinen Fahrzeugmasse als "Zieldrehzahl-orientierte Schaltung" und bei Vorliegen einer starken Beladung bzw. einer großen Fahrzeugmasse als "Schaltdrehzahl-orientierte Schaltung" durchgeführt wird.

5. Verfahren nach zumindest einem der Ansprüche 1 bis 4, **dadurch gekennzeichnet, dass** während einer Fahrt permanent der Lastzustand des Antriebsmotors ermittelt wird, und dass eine Schaltung bei einem aktuellen Teillastbetrieb des Antriebsmotors als "Zieldrehzahl-orientierte Schaltung" und bei einem aktuellen Volllasibetrieb des Antriebsmotors als "Schaltdrehzahl-orientierte Schaltung" durchgeführt wird.

6. Verfahren nach zumindest einem der Ansprüche 1 bis 5, **dadurch gekennzeichnet, dass** während einer Fahrt permanent die Leistungs-anforderung des Fahrers ermittelt wird, und dass eine Schaltung bei Vorliegen einer geringen Leistungsanforderung des Fahrers als "Zieldrehzahl-orientierte Schaltung" und bei Vorliegen einer hohen Leistungsanforderung des Fahrers als "Schaltdrehzahl-orientierte Schaltung" durchgeführt wird.

7. Verfahren nach zumindest einem der Ansprüche 1 bis 6, **dadurch gekennzeichnet, dass** während einer Fahrt permanent die Betätigung eines Kickdown-Schalters erfasst wird, und dass eine durch die Betätigung des Kickdown-Schalters ausgelöste Rückschaltung als "Schaltdrehzahl-orientierte Schaltung" durchgeführt wird.

8. Verfahren nach zumindest einem der Ansprüche 1 bis 7, **dadurch gekennzeichnet, dass** bei wenigstens einer der beiden Schaltungsarten der Schaltmodus "Einhalten einer Gangsprungvorgabe" oder der Schaltmodus "Ausschöpfen des verfügbaren Drehzahlbereichs" vorgesehen sind, und dass unmittelbar vor einer Schaltung in Abhängigkeit von zumindest einem der Betriebsparameter entschieden wird, in welchem Schaltmodus die Schaltung durchgeführt wird.

9. Verfahren nach Anspruch 8, **dadurch gekennzeichnet, dass** vor einer Durchführung der Schaltung im Schaltmodus "Einhalten einer Gangsprungvorgabe" geprüft wird, ob die zugeordnete Drehzahlgrenze überschritten wird, und dass bei einer Überschreitung der Drehzahlgrenze der vorgesehene Gangsprung stufenweise so lange reduziert wird, bis die Drehzahlgrenze eingehalten wird.

10. Verfahren nach Anspruch 8 oder 9, **dadurch gekennzeichnet, dass** während einer Fahrt permanent der Lastzustand und die Motordrehzahl des Antriebsmotors ermittelt werden, und dass eine Schaltung bei Vorliegen von Volllastbetrieb des Antriebsmotors und einer niedrigen Motordrehzahl oder bei Vorliegen einer hohen Motordrehzahl im Schaltmodus "Ausschöpfen des verfügbaren Drehzahlbereichs" durchgeführt wird, und dass eine Schaltung bei Vorliegen einer mittleren Motordrehzahl im Schaltmodus "Einhalten der Gangsprungvorgabe" erfolgt.

11. Verfahren nach zumindest einem der Ansprüche 1 bis 10, **dadurch gekennzeichnet, dass** vor der Schaltung der während der Schaltung wirksame Fahrwiderstand ermittelt und die daraus resultierende abtriebsseitige Drehzahländerung berechnet wird, und dass mit der abtriebsseitigen Drehzahländerung bei einer "Schaltdrehzahl-orientierten Schaltung" die Zieldrehzahl n_ziel und bei einer "Zieldrehzahl-orientierten Schaltung" die Schaltdrehzahl n_schalt korrigiert wird.

12. Verfahren nach Anspruch 11, **dadurch gekennzeichnet, dass** bei einer "Schaltdrehzahl-orientierten Schaltung" die Zieldrehzahl n_schalt bei hohem Fahrwiderstand abgesenkt und bei niedrigem Fahrwiderstand erhöht wird.

13. Verfahren nach Anspruch 11, **dadurch gekennzeichnet, dass** bei einer "Zieldrehzahl-orientierten Schaltung" die Schaltdrehzahl n_schalt bei hohem Fahrwiderstand erhöht und bei niedrigem Fahrwiderstand abgesenkt wird.

## Claims

1. Method for controlling shifting of a stepped automatic transmission of a motor vehicle, in which operating parameters of the motor vehicle are continuously sensed and respectively evaluated for the triggering and execution of a shift operation from an actual gearspeed into a target gearspeed, wherein before a shift operation the shifting rotational speed n_shift for triggering the shift operation and the target gearspeed are respectively determined, **characterized in that** the types of shift operation "shifting rotational speed-oriented shift operation" and "target rotational speed-oriented shift operation" are provided, and **in that** directly before a shift operation it is decided in which of the two types of shift operation the shift operation will be carried out, as a function of at least one of the operating parameters.

2. Method according to Claim 1, **characterized in that** during a journey the travel resistance of the motor vehicle is determined continuously, and **in that** a shift operation is carried out as a "target rotational speed-oriented shift operation" when a low travel resistance is present and as a "shifting rotational speed-oriented shift operation" when a high travel resistance is present.

3. Method according to Claim 1 or 2, **characterized in that** during a journey the inclination of the carriageway is determined continuously, and **in that** a shift operation is carried out as a "target rotational speed-oriented shift operation" in the case of travel on flat ground or on a route with a negative gradient, and as a "shifting rotational speed-oriented shift operation" in the case of travel on a route with a positive gradient.

4. Method according to Claim 2 or 3, **characterized in that** during travel the load state or the vehicle mass of the motor vehicle is determined continuously, and **in that** a shift operation is carried out as a "target rotational speed-oriented shift operation" when a low load or a low vehicle mass is present and as a "shifting rotational speed-oriented shift operation" when a large load or a large vehicle mass is present.

5. Method according to at least one of Claims 1 to 4, **characterized in that** during travel the load state of the drive motor is determined continuously, and **in that** a shift operation is carried out as a "target rotational speed-oriented shift operation" in the case of a current partial load operation of the drive motor and as a "shifting rotational speed-oriented shift operation" in the case of a current full load operation of the drive motor.

6. Method according to at least one of Claims 1 to 5, **characterized in that** during travel the power demand of the driver is determined continuously, and **in that** a shift operation is carried out as a "target rotational speed-oriented shift operation" when a low power demand of the driver is present and as a "shifting rotational speed-oriented shift operation" when a high power demand of the driver is present.

7. Method according to at least one of Claims 1 to 6, **characterized in that** during travel the activation of a kick down switch is sensed continuously, and **in that** a shifting down operation which is triggered by the activation of the kick down switch is carried out as a "shifting rotational speed-oriented shift operation".

8. Method according to at least one of Claims 1 to 7, **characterized in that** in at least one of the two types of shift operation the shifting mode "maintain a gearspeed jump setting" or the shifting mode "exploit the available rotational speed range" is provided, and **in that** directly before a shift operation it is decided in which shifting mode the shift operation will be carried out, as a function of at least one of the operating parameters.

9. Method according to Claim 8, **characterized in that** before the shift operation is carried out in the shifting mode "maintain a gearspeed jump setting" it is tested whether the assigned rotational speed limit is exceeded, and **in that** when the rotational speed limit is exceeded the gearspeed jump which is provided is reduced incrementally until the rotational speed limit is maintained.

10. Method according to Claim 8 or 9, **characterized in that** during travel the load state and the motor rotational speed of the drive motor are determined continuously and **in that** a shift operation is carried out in the shift mode "exploit the available rotational speed range" when full load operation of the drive motor and a low motor rotational speed are present or when a high motor rotational speed is present, and **in that** a shift operation takes place in the shifting mode "maintain the gearspeed jump setting" when a medium motor rotational speed is present.

11. Method according to at least one of Claims 1 to 10, **characterized in that** before the shift operation the travel resistance which is effective during the shift operation is determined and the resulting output-side change in rotational speed is calculated, and **in that** the target rotational speed n_target is corrected with the output-side rotational speed change in the case of a "shifting rotational speed-oriented shift operation", and the shifting rotational speed n_shift is corrected with the output-side change in rotational speed in the case of a "target rotational speed-oriented shift operation".

12. Method according to Claim 11, **characterized in that** in the case of a "shifting rotational speed-oriented shift operation" the target rotational speed n_target is lowered when the travel resistance is high and increased when the travel resistance is low.

13. Method according to Claim 11, **characterized in that** in the case of a "target rotational speed-oriented shift operation" the shifting rotational speed n_shift is increased when the travel resistance is high and lowered when the travel resistance is low.

## Revendications

1. Procédé de commande de changement de vitesse d'une boîte de vitesses à étages automatisée d'un véhicule automobile, dans lequel des paramètres de fonctionnement du véhicule automobile sont détectés en permanence et sont analysés à chaque fois pour déclencher et mettre en oeuvre un changement de vitesse depuis une vitesse actuelle vers une vitesse cible, où, avant un changement de vitesse, à chaque fois le régime de changement de vitesse n_schalt pour déclencher le changement de vitesse et la vitesse cible sont déterminés, **caractérisé en ce que** les types de changement de vitesse "changement de vitesse orienté par rapport au régime de changement de vitesse" et "changement de vitesse orienté par rapport au régime cible" sont prévus, et **en ce que** directement avant un changement de vitesse, on décide en fonction d'au moins l'un des paramètres de fonctionnement, dans lequel des deux types de changement de vitesse le changement de vitesse est effectué.

2. Procédé selon la revendication 1, **caractérisé en ce que** pendant une conduite, on détermine en permanence la résistance à l'avancement du véhicule automobile et **en ce qu'**un changement de vitesse est effectué en présence d'une faible résistance à l'avancement en tant que "changement de vitesse orienté par rapport au régime cible" et en présence d'une grande résistance à l'avancement, en tant que "changement de vitesse orienté par rapport au régime de changement de vitesse".

3. Procédé selon la revendication 1 ou 2, **caractérisé en ce que** pendant une conduite, on détermine en permanence la pente de la route et **en ce qu'**un changement de vitesse est effectué en conduite à plat ou en descente en tant que "changement de vitesse orienté par rapport au régime cible" et en cas de conduite en montée en tant que "changement de vitesse orienté par rapport au régime de changement de vitesse".

4. Procédé selon la revendication 2 ou 3, **caractérisé en ce que** pendant une conduite, on détermine en permanence l'état de chargement ou la masse du véhicule automobile, et **en ce qu'**un changement de vitesse est effectué en présence d'un faible chargement ou d'une petite masse du véhicule en tant que "changement de vitesse orienté par rapport au régime cible" et en présence d'un fort chargement ou d'une grande masse du véhicule, en tant que "changement de vitesse orienté par rapport au régime de changement de vitesse".

5. Procédé selon au moins l'une quelconque des revendications 1 à 4, **caractérisé en ce que** pendant une conduite, on détermine en permanence l'état de charge du moteur d'entraînement, et **en ce qu'**un changement de vitesse est effectué en cas de mode de fonctionnement actuel en charge partielle du moteur d'entraînement en tant que "changement de vitesse orienté par rapport au régime cible" et en cas de mode de fonctionnement actuel en pleine charge du moteur d'entraînement, en tant que "changement de vitesse orienté par rapport au régime de changement de vitesse".

6. Procédé selon au moins l'une quelconque des revendications 1 à 5, **caractérisé en ce que** pendant une conduite, on détermine en permanence la demande de puissance du conducteur, et **en ce qu'**un changement de vitesse est effectué en présence d'une demande de faible puissance du conducteur en tant que "changement de vitesse orienté par rapport au régime cible" et en présence d'une demande de forte puissance du conducteur en tant que "changement de vitesse orienté par rapport au régime de changement de vitesse".

7. Procédé selon au moins l'une quelconque des revendications 1 à 6, **caractérisé en ce que** pendant une conduite, on détermine en permanence l'actionnement d'un commutateur de pied au plancher, et **en ce qu'**une commutation inverse déclenchée par l'actionnement du commutateur de pied au plancher est effectuée en tant que "changement de vitesse orienté par rapport au régime de changement de vitesse".

8. Procédé selon au moins l'une quelconque des revendications 1 à 7, **caractérisé en ce que** dans le cas d'au moins l'un des types de changement de vitesse, le mode de changement de vitesse "respect d'une consigne de saut de vitesse" ou le mode de changement de vitesse "épuisement de la plage de régime disponible" sont prévus, et **en ce qu'**immédiatement avant un changement de vitesse, on décide, en fonction d'au moins l'un des paramètres de fonctionnement, dans quel mode de changement de vitesse le changement de vitesse a lieu.

9. Procédé selon la revendication 8, **caractérisé en ce qu'**avant la réalisation du changement de vitesse en mode de changement de vitesse "respect d'une consigne de saut de vitesse", on vérifie si la limite de régime associée est dépassée, et **en ce que** dans le cas d'un dépassement de la limite de régime, le saut de vitesse prévu est réduit par incrément jusqu'à ce que la limite de régime soit respectée.

10. Procédé selon la revendication 8 ou 9, **caractérisé en ce que** pendant une conduite, on détermine en permanence l'état de charge et le régime du moteur d'entraînement, et **en ce qu'**un changement de vitesse est effectué en présence d'un mode de fonctionnement en pleine charge du moteur d'entraînement et d'un bas régime du moteur, ou en présence d'un haut régime du moteur en mode de changement de vitesse "épuisement de la plage de régime disponible", et **en ce qu'**un changement de vitesse a lieu en présence d'un régime moyen du moteur en mode de changement de vitesse "respect de la consigne de saut de vitesse".

11. Procédé selon au moins l'une quelconque des revendications 1 à 10, **caractérisé en ce qu'**avant le changement de vitesse, on détermine la résistance effective à l'avancement pendant le changement de vitesse, et on calcule la variation de régime en résultant du côté de la prise de force, et **en ce qu'**avec la variation de régime du côté de la prise de force, dans le cas d'un "changement de vitesse orienté par rapport au régime de changement de vitesse", on corrige le régime cible n_ziel et dans le cas d'un "changement de vitesse orienté par rapport au régime cible", on corrige le régime de changement de vitesse n_schalt.

12. Procédé selon la revendication 11, **caractérisé en ce que** dans le cas d'un "changement de vitesse orienté par rapport au régime de changement de vitesse", le régime cible n_ziel est abaissé pour une haute résistance à l'avancement et est augmenté pour une faible résistance à l'avancement.

13. Procédé selon la revendication 11, **caractérisé en ce que** dans le cas d'un "changement de vitesse orienté par rapport au régime cible", le régime de changement de vitesse n_schalt est augmenté pour une haute résistance à l'avancement et est abaissé pour une faible résistance à l'avancement.
